# EUROPEAN PATENT APPLICATION

(11) **EP 1 961 395 A1**
(43) Date of publication of application: **27.08.2008**
(21) Application number: 05824706.5
(22) Date of filing: 06.12.2005
(51) Int. Cl.: A61C 7/20, A61C 7/12

(54) **METHOD AND KIT INCLUDING STOP ELEMENTS FOR CORRECTING DENTAL MALOCCLUSIONS WITH PRE-FORMED NITINOL ARCHES**

(71) Applicant: Landeros Ramirez, Graciela, Guadalajara 45060 (MX)
(72) Inventor: Landeros Ramirez, Graciela, Guadalajara 45060 (MX)
(74) Representative: SUGRANES - VERDONCES - FERREGÜELA
(86) International application number: PCT/MX2005/000113
(87) International publication number: WO 2007/067025

(57) **Abstract**

The present invention relates to a method and a kit for the correction of dental malpositions, wherein the kit is formed by at least one pre-formed arch for Nitinol orthodontics, at least two perforated silver spherules which, when introduced into the arch and being deformed, remains fixed to the arch, serving as a stop.

The method consists of positioning the necessary elements, aligning the teeth with the application of the preformed Nitinol dental arch with stops abutting thereagainst; closing spaces; levelling; applying a pretorque and a torque.

## Description

### TECHNICAL FIELD OF THE INVENTION

The present invention is applicable in the Orthodontics field, mainly in the device used for the correction of the position of the teeth, as it provides a method and kit for the correction of dental malocclusions, with the formation of a pre-formed nitinol dental arch with stops.

### BACKGROUND

The magnitude of the force necessary to move a tooth is very low, about 0.025 g/cm², equivalent to the pressure of the capillaries of the dental apparatus; as higher force levels will cause hyalinization or necrosis and pain of the adjacent tissues. Therefore, the force applied on the dental apparatus with the wires used must always be measured; such is the case of the very elastic Nitinol wires, with which teeth can be moved a considerable distance without carrying out an excessive force (Atlas of Orthodontics, Principles and Clinical Applications, Dr Anthony Viazis, associate Orthodontics professor of the Baylor College of Dentistry, Dallas, Texas. Edition 1995).

Twist type wires such as "Twist Flex", "Respond", "TripleFlex", "Coaxial", "Turbo", "Force 9" wires have a high resilience and aid in uncrowding. "Blue Elgiloy" and Yellow wires are treated steel wires. "TMA", which is Titanium Molybdenum, is a wire which is very resilient and which can be handled. "Ht *G*old" wire is for dolicephalic Class II-1 patients who require maximum anchoring, who are very unstable patients due to their weak musculature. Cu-Niti wire has copper alloying, which provides it with high resilience. (Diagnóstico Clínico y Laboratorio de Doblado de Alambre (Clinical Diagnosis and Wire Bending Laboratory), Dr. Guillermo del Valle, Dr. Luis Ruiz Martínez, Ortodoncia I.D.A.P., Guadalajara, Jal. Mexico).

The use of pre-formed Nitinol (Nickel-Titanium) dental arches for the correction of the position of the teeth is currently well known, a fact which revolutionized the Orthodontics field due to the elasticity characteristics thereof. However, it is considered that sufficient use is not made of said Nitinol dental arches, especially when the sliding thereof in the tubes of the bands is not desired, and that therefore maximum use is not made of the elasticity provided by said material.

In the case of the steel dental wires and arches, the sliding is prevented by means of bends, which is feasible due to the characteristics of the material; but obviously bends cannot be made in the Nitinol arches also due to its already mentioned characteristics.

Therefore, to prevent all the mentioned drawbacks, a pre-formed dental wire with stops was developed to prevent the sliding of Nitinol dental arches, which wire is described below.

### DETAILED DESCRIPTION OF THE INVENTION

The characteristic details of the method and the kit for making the maximum use of the Nitinol dental arch to correct dental malpositions are described below and with the aid of the attached drawings, which are only mentioned by way of example and must not be considered as limiting the present invention.

### Brief Description of the Drawings.

Figure 1 is a conventional perspective view of the components of the kit of the present invention.
Figure 2 is a front view of a Nitinol arch with the stops placed.
Figure 3 is a conventional perspective view of a set of teeth in which the placement of a Nitinol arch with the stops is observed.

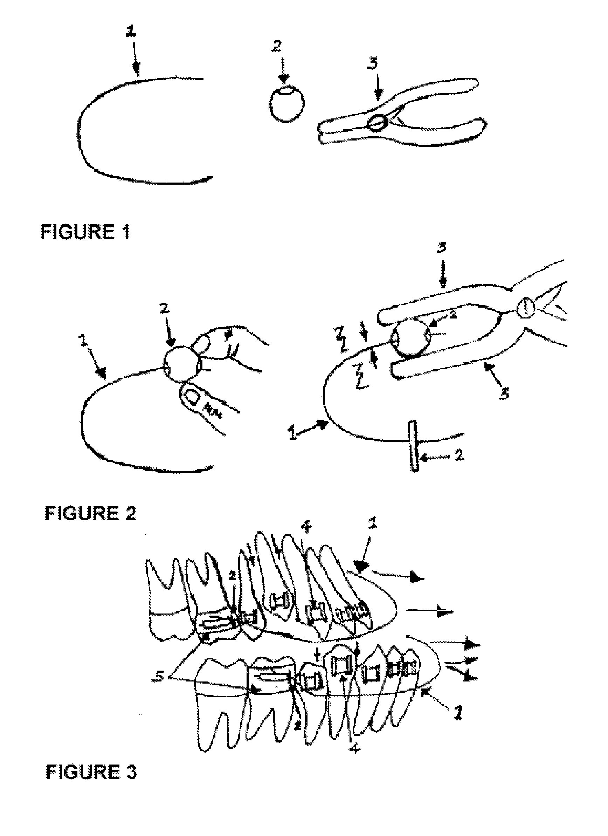

With reference to said figures, the kit for the correction of dental malpositions with pre-formed Nitinol arches is formed by:
i) At least one pre-formed Nitinol arch of those commonly known (1);
ii) at least two perforated silver spherules (2), into which the pre-formed dental arch (1) is introduced and is flattened by pressure until being fixed in said dental arch (1), such that one wall abuts against the other wall, to serve as stop in the Nitinol arch (see figure 2).

A modified pre-formed dental arch (1) is thus obtained due to the addition of the stops (2). This makes my invention novel because as a result, the unwanted or unrequired sliding is prevented, making the maximum used of said arch (1).

It is convenient to mention that said stops (2) can be added in arches of another material similar to Niti, in other words, elastic and resilient materials, because Nitinol arches can be found on the market with different names and the characteristics, application and provided force of each of them must, of course be thoroughly studied before using them in the patient.

### One of the embodiments of the kit is that it can also include:

A clamp (3) aiding in deforming the sphere (2), being fixed in the arch, said stop preventing the sliding thus being formed, however this part can be optional; and/or

A bottle of astringent solution which frees from fat, saliva and food remains which may adhere to the pre-formed Nitinol arch during the test period.

The present invention therefore also comprises a method for the correction of dental malpositions, characterized by the following steps:
i) placing the brackets (4) and the bands (5) typical of the treatment and in a classic manner, according to the technique of choice.
ii) aligning the teeth, which is carried out by means of the wire of choice, according to the case and criterion of the orthodontist, it could be a number 12 round pre-formed Nitinol arch (1), for which a measurement must first be made in the dental arch of the patient in order to mark or indicate the exact place in said pre-formed arch (1) where the stops will be located; then the preformed dental arch (1) is treated with an astringent to free it from food remains and fat which could prevent the perfect and constant adherence of the stops; subsequently measuring the area which will be freed up between the pre-formed dental arch (1) and the brackets already attached to the tooth; subsequently the ends of the pre-formed dental arch (1) are introduced into the tubes of the bands (5) of the molars; the pre-formed dental arch (1) is then introduced into the brackets (4) and are held by means of some modules (small ligatures, not shown); and finally the excess ends of the pre-formed nitinol dental arch (1) are cut to prevent them from injuring the tissues of the cheeks of the patient.

It is important to indicate that the force to be applied to the dental apparatus of the patient must not be exaggerated, therefore this force must be measured with a Dontrix (an apparatus for the measurement of the force applied in ounces), due to that explained below.

With this step vestibular movements are made, thus expanding the dental arch in order to extrude, intrude, solve a crossbite, eliminate crowdings, etc..., of course, always taking care that the application of the forces on the masticatory apparatus of the patient is suitable, measuring it with the Dontrix (a typical apparatus for the measurement of the forces applied by the orthodontist on the masticatory apparatus of the patient). They must be from 2 to 4 ounces (28.5g. is the force of 1 ounce or, in other words, 57g. (2 ounces) to 114g. would correspond to 4 ounces; 3.5 ounces= almost 100g. (99.75 g.)); with number 12 round wire, whether it is to make distal movements, vestibular movements, to intrude, to extrude, towards where it is to be moved, it is an optimal physiological force, thus no injuries are caused and problems are avoided. But this must be taken into account with the heavier wire (Biomechanics of Dr. Luis Ruiz Martínez, Ortodoncia I.D.A.P. Guadalajara, Jal. Mexico)

Thus, according to the descriptive classification of dental movement, according to *Burstone,* "*Ortodoncia Clínica", José Antonio Canut Brusola, School of Medicine of the Universidad de Valencia*, Edition 1992, the movement performed with this technique is a mass movement.
iii) re-positioning brackets at a balanced level in all the teeth, in a traditionally known manner.
iv) placing 0.16 x 0.22 rectangular wire for a pretorque (it can be made of Nitinol, which will provide a control in the inclination of the crown-root) and ligatures suitable for the case, to prevent the teeth from returning to their initial position.
v) applying a torque or termination, for this activity a 0.18 x 0.22 rectangular stainless steel wire according to what is classic and traditional is required, which wire completely fills the slot of the bracket, providing the maximum torque control. Ligatures in a classic manner and according to the case.

The previously described method can have certain variants which will depend on the case of the patient to be treated, the following can be mentioned:

To correct crossbites, in step "ii) aligning the teeth", a plate for raising the bite is also required, being applied in a traditional manner. This step is very simple to carry out due to fact that the treatment is simplified with the aid of the stop generated by the spherule (2), very possibly saving in labour and steps therein and make the maximum use of the pre-formed Nitinol arch (1).

In cases of closing spaces, when there are extractions, in step ii) aligning the teeth, this can be done by making distal or mesial movements, as required. This activity is carried out in a traditional manner by means of the use of the Alastic elastic chain, bends in the wire or any other accessory suitable for that purpose, as well as the use of ligatures suitable for the case.

When levelling is not achieved with step ii), a dental levelling of the curve of Spee will be required in order to move the teeth to a normal vertical position inside the alveolus and in relation to the adjacent teeth, which is carried out in the traditional manner and with the elements that are classically used.

## Claims

1. A kit for the correction of dental malocclusions with pre-formed Nitinol arches, **characterized in that** it is formed by: at least one pre-formed Nitinol dental arch of those commonly known; and at least two perforated silver spherules, into which the pre-formed dental arch is introduced and is flattened by pressure until being fixed in said dental arch.

2. A kit for the correction of dental malocclusions according to claim 1, **characterized in that** it includes a clamp aiding in deforming the sphere, being fixed in the arch.

3. A kit for the correction of dental malocclusions according to claim 1 and/or 2, **characterized in that** it contains a bottle with astringent solution which frees from fat, saliva and food remains which may adhere to the pre-formed Nitinol arch.

4. A pre-formed dental arch, modified for the correction of dental malocclusions, of those comprising a Nitinol wire, **characterized in that** at least two stops formed by the deformation of two spherules are abutted against said wire at a certain distance.

5. A method for the correction of dental malpositions, comprising the steps of placing the brackets and the bands; aligning the teeth; re-positioning brackets; applying a pretorque; and applying a torque or termination; **characterized in that** the step of aligning the teeth is carried out by means of the wire of choice, according to the case and criterion of the orthodontist, it could be a number 12 round pre-formed Nitinol arch, for which a measurement must first be made in the dental arch of the patient in order to mark or indicate the exact place in said pre-formed arch where the stops will be located; then the preformed dental arch is treated with an astringent to free it from food remains and fat which could prevent the perfect and constant adherence of the stops; subsequently measuring the area which will be freed up between the pre-formed dental arch and the brackets already attached to the tooth; subsequently the ends of the pre-formed dental arch are introduced into the tubes of the bands of the molars; the pre-formed dental arch is then introduced into the brackets and are held by means of some modules (small ligatures); and finally the excess ends of the pre-formed Nitinol dental arch are cut to prevent them from injuring the tissues of the cheeks of the patient.

6. A method for the correction of dental malpositions according to claim 5, **characterized in that** in the step of aligning the teeth it is required to correct a crossbite for which it is used a plate to raise the bite, being applied in a traditional manner.

7. A method for the correction of dental malpositions according to claim 5, **characterized in that** in the step of aligning the teeth, in some cases, closing spaces are necessary when there are extractions, that can be done by making distal or mesial movements, as required.

8. A method for the correction of dental malpositions according to claim 5, **characterized in that** when the levelling of the teeth is not achieved in step aligning the teeth, a dental levelling of the curve of Spee will be required in order to move the teeth to a normal vertical position inside the alveolus and in relation to the adjacent teeth, which is carried out in the traditional manner and with the elements that are classically used.
